# EUROPÄISCHE PATENTSCHRIFT

(11) **EP 2 501 956 B1**
(45) Veröffentlichungstag und Bekanntmachung des Hinweises auf die Patenterteilung: **22.07.2015**
(21) Anmeldenummer: 10772978.2
(22) Anmeldetag: 18.10.2010
(51) Int. Cl.: F16F 9/348

(54) **DÄMPFERVENTIL**
DAMPER VALVE
SOUPAPE D'AMORTISSEMENT

(30) Priorität: 20.11.2009 DE 102009054122
(43) Veröffentlichungstag der Anmeldung: 26.09.2012
(73) Patentinhaber: Volkswagen Aktiengesellschaft, 38440 Wolfsburg (DE)
(72) Erfinder: SCHREINER, Marco, 38120 Braunschweig (DE); LÜDECKE, Matthias, 38100 Braunschweig (DE); EIDINGER, Florian, 38556 Bokensdorf (DE); LIEBSCHWAGER, Ralf, 38154 Königslutter (DE); JAHN, Steffen, 38116 Braunschweig (DE); FLOTMANN, Stefan, 38531 Rötgesbüttel (DE); FRIEDRICH, Oliver, 31275 Lehrte/Arpke (DE)
(86) Internationale Anmeldenummer: PCT/EP2010/006348
(87) Internationale Veröffentlichungsnummer: WO 2011/060864

(56) Entgegenhaltungen:
- EP-A1- 0 662 570
- EP-A1- 1 363 043
- EP-A2- 2 045 484
- DE-A1- 3 503 153
- DE-A1-102004 057 022
- DE-A1-102006 061 405
- US-A1- 2006 011 430

## Beschreibung

Die Erfindung bezieht sich auf ein kraftgesteuert einstellbares Dämpferventil, umfassend einen Grundkörper, eine federelastische Verschlusseinrichtung, die in einem Ruhezustand einen Strömungsweg durch den Grundkörper absperrt und bei Anströmung durch ein Strömungsmedium öffnet, wobei die Verschlusseinrichtung eine oder mehrere Ventilscheiben und eine zu diesen in Reihe geschaltete Druckfeder, welche die eine oder mehreren Ventilscheiben gegen den Grundkörper verspannt, umfasst, eine Ventilführung, an deren Außenumfang die federelastische Verschlusseinrichtung axial geführt ist, und einen Ventilfedersitz zur Abstützung der federelastischen Verschlusseinrichtung, der axial auf die Ventilführung aufgeschoben und mit einer radial kraftschlüssig wirkenden Verbindung an der Ventilführung festgelegt ist.

Ein derartiges Dämpferventil ist aus DE 102 22 054 A1 sowie aus dem korrespondierenden europäischen Patent EP 1 363 043 B2 bekannt. Bei diesem Dämpferventil lässt sich die Vorspannkraft der Druckfeder, die für die Kennung des Dämpferventils von Bedeutung ist, kraftgesteuert einstellen. Hierzu wird bei der Montage die Druckfeder solange gespannt, bis die gewünschte Vorspannkraft erreicht ist. Da anschließend eine Festlegung der Druckfeder der mittels einer radial kraftschlüssig wirkenden Verbindung erfolgt, bleibt die Vorspannkraft im eingestellten Umfang erhalten und wird nicht etwa, wie beispielsweise beim Festlegen mittels einer Spannmutter, verändert.

Ein weiteres Dämpferventil der eingangs genannten Art ist aus DE 10 2006 061 405 A1 bekannt. Auch hier ist eine kraftgesteuerte Einstellung der Druckfeder möglich, welche in diesem Fall als Federscheibenpaket aus mehreren flachen, aufeinander gestapelten Ventilscheiben gebildet ist.

Ein weiteres Dämpferventil ist aus der US 6,371,264 B1 bekannt. Allerdings erfolgt dort die Einstellung der Vorspannkraft weggesteuert mittels einer Spannmutter, so dass die Federkennlinie der Druckfeder sehr genau bekannt sein muss, um mittels der Zustellung der Spannmutter die Vorspannkraft der Druckfeder einzustellen. Dies ist insbesondere in der Serienfertigung problematisch, wenn die Federkonstante der bereitgestellten Druckfedern fertigungsbedingt schwankt. Ein weiteres Dämpferventil dieser gattungsfremden Bauart ist aus EP 2 045 484 A2 bekannt.

Vor diesem Hintergrund liegt der Erfindung die Aufgabe zugrunde, ein Dämpferventil zu schaffen, das bei einfacher und genauer Einstellung der Vorspannkraft eine geringe Streuung der Kennung hinsichtlich des Öffnungs- und Schließverhaltens aufweist.

Diese Aufgabe wird durch ein Dämpferventil gemäß Patentanspruch 1 gelöst. Das erfindungsgemäße Dämpferventil umfasst insbesondere einen Grundkörper, eine federelastische Verschlusseinrichtung, die in einem Ruhezustand einen Strömungsweg durch den Grundkörper absperrt und bei Anströmung durch ein Strömungsmedium öffnet, wobei die Verschlusseinrichtung eine oder mehrere Ventilscheiben und eine zu diesen in Reihe geschaltete Druckfeder, welche die eine oder mehreren Ventilscheiben gegen den Grundkörper verspannt, umfasst, eine Ventilführung, an deren Außenumfang die federelastische Verschlusseinrichtung axial geführt ist, und einen Ventilfedersitz zur Abstützung der federelastischen Verschlusseinrichtung, der axial auf die Ventilführung aufgeschoben und mit einer radial kraftschlüssig wirkenden Verbindung an der Ventilführung festgelegt ist. Das Dämpferventil zeichnet sich dadurch aus, dass die Druckfeder mehrere in Reihe geschaltete Tellerfedern aufweist.

Hierdurch wird insbesondere bei hohen Vorspannkräften eine geringe Streuung der Kennung des Dämpferventils erzielt. Durch die Verwendung der Tellerfedern werden etwaige Kippmomente in der Druckfeder vermieden, da die Krafteinleitungsbereiche an den Federenden im Wesentlichen rotationssymmetrisch gestaltet werden können.

In Kombination mit einer lösbaren, radial kraftschlüssig wirkenden Verbindung ergibt sich bei der Montage eine Toleranzreduzierung in Bezug auf die Kennung des Öffnungs- und Schließverhaltens. Erfindungsgemäße Dämpferventile können nahezu reibungsfrei und ohne Einflüsse durch die Federenden oder ähnliches kraftgesteuert eingestellt werden. Dies kann insbesondere auch automatisiert erfolgen, wobei sich eine hohe Prozesssicherheit ergibt.

Weitere Ausgestaltungen der Erfindung sind in den Patentansprüchen angegeben.

Gemäß einer bevorzugten Ausführungsform weist die Druckfeder ein Tellerfederpaket mit mindestens zwei Tellerfedern auf, die entgegengesetzt eingebaut sind. Hierdurch ergibt sich eine verhältnismäßig weiche Federkennlinie. Ein etwaiges Setzen der Feder führt zu keinem großen Verlust an Vorspannkraft. Dies ermöglicht eine besonders geringe Streuung des Öffnungs- und Schließverhaltens.

Die Tellerfedern eines solchen Tellerfederpakets sind vorzugsweise gleichartig ausgebildet, wodurch die Teilevielfalt gering gehalten wird.

In einer bevorzugten Ausgestaltung der Erfindung sind zwei gleichartige Paare entgegengesetzt angeordneter Tellerfedern in Reihe geschaltet. Dies ermöglicht bei einer geringen Anzahl von Tellerfedern eine geringe Streuung.

Gemäß einer weiteren vorteilhaften Ausgestaltung der Erfindung ist ein Ventilteller zwischen den Ventilscheiben und den Tellerfedern angeordnet und an der Ventilführung axial geführt. Dabei ist die Tellerfedern an einem innenliegenden, der Ventilführung benachbarten Wandabschnitt des Ventiltellers abgestützt. Hierdurch erfolgt die Krafteinleitung in den Ventilteller in stabiler Weise nahe der Ventilführung, so dass ein Verkanten des Ventiltellers mit der Ventilführung vermieden wird.

Zudem ermöglicht dies die Verwendung verhältnismäßig weicher Tellerfedern, deren Außendurchmesser größer sein kann, als der Außendurchmesser des Ventiltellers.

Im Hinblick auf die räumlichen Gegebenheiten in einem Schwingungsdämpfer wird das Verhältnis von Außendurchmesser zu Pakethöhe für die Druckfeder im Ruhezustand bevorzugt im Bereich von 2,5 bis 3,5 gewählt, weiter bevorzugt im Bereich von 2,65 bis 3,4 und noch weiter bevorzugt im Bereich von 2,95 bis 3,15. In diesem Bereich ergeben sich für Tellerfedern hinsichtlich der Einstellung der Vorspannkraft besonders geeignete Federkennlinien.

Das Verhältnis von Außendurchmesser zu Innendurchmesser der Tellerfedern liegt vorzugsweise im Bereich von 1,7 bis 2,0 und weiter bevorzugt im Bereich von 1,8 bis 1,95.

Das Verhältnis von Außendurchmesser zu Wanddicke der Tellerfedern liegt vorzugsweise im Bereich von 16 bis 21,5 und weiter bevorzugt im Bereich von 17,5 bis 19,5.

Es ist ferner denkbar, dass die an dem Ventilteller abgestützte Tellerfeder anstatt mit einer Innenkante mit einer Außenkante an dem Ventilteller anliegt.

Gemäß einer weiteren vorteilhaften Ausgestaltung der Erfindung ist an dem Dämpferventil eine zweite federelastische Verschlusseinrichtung vorgesehen, die im Ruhezustand einen zweiten Strömungsweg durch den Grundkörper, der dem ersten Strömungsweg entgegengerichtet ist, absperrt. Die zweite Verschlusseinrichtung weist mindestens eine Ventilscheibe auf, die mit einem radial am weitesten innenliegenden Abschnitt zwischen dem Grundkörper und einer Schulter einer Kolbenstange eingespannt ist, wobei die Kraft der Einspannung durch die Spannkraft der an einer Kolbenstange befestigten Ventilführung bereitgestellt ist. Hierdurch wird eine einfache Montage des Dämpferventils an einer Kolbenstange erzielt, da die zweite Verschlusseinrichtung im Paket mit dem Grundkörper an einer Kolbenstange montiert und festgelegt werden kann.

Die zweite Verschlusseinrichtung kann zusätzlich eine Anschlagplatte aufweisen, die zwischen der bzw. den Ventilscheiben der zweiten Verschlusseinrichtung und der Schulter der Kolbenstange angeordnet ist und die maximale Durchbiegung der Ventilscheibe bzw. Ventilscheiben der zweiten Verschlusseinrichtung begrenzt. Hierdurch lässt sich die maximale Öffnung der Ventilscheiben der zweiten Verschlusseinrichtung sehr einfach einstellen. Letztere werden bevorzugt durch eine Tellerfeder vorgespannt, so dass sich für die zweite Verschlusseinrichtung eine in Axialrichtung sehr kompakte Bauweise ergibt.

Das vorstehend erläuterte Dämpferventil kommt bevorzugt an Schwingungsdämpfern zum Einsatz, bei denen eine geringe Streuung der Kennung benötigt wird.

Nachfolgend wird die Erfindung anhand eines in der Zeichnung dargestellten Ausführungsbeispiels näher erläutert. Die Zeichnung zeigt in:
- Figur 1: eine Längsschnittansicht eines Dämpferventils nach einem Ausführungsbeispiel der Erfindung, und in
- Figur 2: eine Explosionsdarstellung des Dämpferventils.

Das Ausführungsbeispiel zeigt einen Schwingungsdämpfer 1 für eine Kraftfahrzeug-Radaufhängung mit einer Kolbenstange 2, an der ein Kolben 3 befestigt ist. Der Kolben 3 ist als Dämpferventil 10 ausgebildet und trennt zwei Arbeitskammern 4 und 5 des Schwingungsdämpfers 1, die über weitere, nicht näher dargestellte Verschlusseinrichtungen und Überströmkanäle miteinander verbunden sein können.

Das Dämpferventil 10 umfasst einen Grundkörper 11, der hier beispielhaft als Folienkolben ausgebildet und an einem Endabschnitt 6 der Kolbenstange 3 befestigt ist. Bei dem dargestellten Ausführungsbeispiel erstreckt sich der Endabschnitt 6 der Kolbenstange 3 durch eine an dem Grundkörper 11 ausgebildete Zentralöffnung 12 hindurch. Es ist jedoch auch möglich, einen Grundkörper 11 ohne eine solche Zentralöffnung an einem Stirnende einer Kolbenstange anzukoppeln.

Das Dämpferventil 10 umfasst weiterhin eine an dem Grundkörper 11 vorgesehene, federelastische Verschlusseinrichtung 13, die im dargestellten Ruhezustand einen Strömungsweg 7 durch den Grundkörper 11 absperrt.

Weiterhin ist eine Ventilführung 14 vorgesehen, die bei dem dargestellten Ausführungsbeispiel den Grundkörper 2 gegenüber der Kolbenstange 3 festlegt, jedoch auch integral an dem Grundkörper 2 ausgebildet sein kann, wenn den Grundkörper 11 anderweitig an der Kolbenstange 2 befestigt ist. Die Ventilführung 14 des Ausführungsbeispiels ist hülsenartig ausgebildet zur Festlegung des Grundkörpers 11 an der Kolbenstange 2 auf einen Außengewindeabschnitt 8 am Ende der Kolbenstange 3 aufgeschraubt. Sie weist einen zylindrischen oder profilierten Außenumfangsabschnitt 15 auf, an dem die federelastische Verschlusseinrichtung 13 axial geführt ist. Durch Aufschrauben der Ventilführung 14 auf den Außengewindeabschnitt 8 der Kolbenstange 3 wird der Grundkörper 11 gegen die Kolbenstange 2 axial verspannt.

Weiterhin umfasst das Dämpferventil 10 einen Ventilfedersitz 16 zur axialen Abstützung der federelastischen Verschlusseinrichtung 13. Der Ventilfedersitz 16 ist axial auf die Ventilführung 14 axial aufgeschoben und mittels einer radial kraftschlüssig wirkenden Verbindung 24 an der Ventilführung 14 festgelegt.

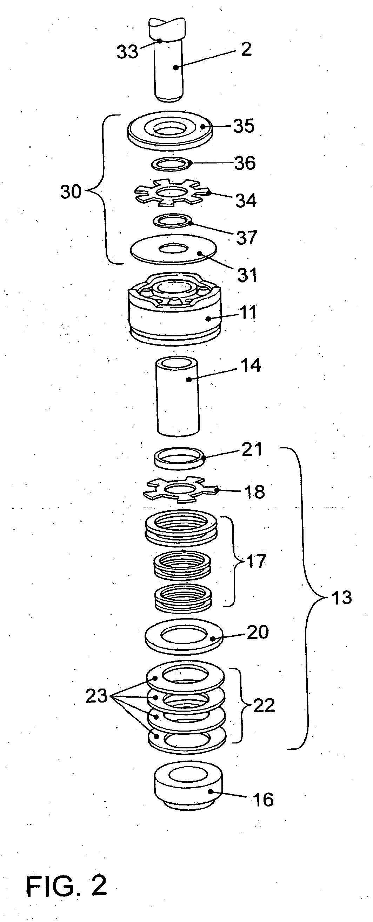

Die federelastische Verschlusseinrichtung 13 weist mindestens eine Ventilscheibe 17, vorzugsweise jedoch ein Paket aus einer Vielzahl von dünnwandigen Ventilscheiben 17 auf, die bevorzugt flach ohne Zwischenräume aufeinandergestapelt sind. Bei dem dargestellten Ausführungsbeispiel weisen die Ventilscheiben 17 eine Abstufung des Außendurchmessers und/oder der Materialdicke auf. Möglich ist es jedoch auch, Ventilscheiben 17 mit gleichen Abmessungen einzusetzen. Weiterhin können an einer oder mehreren Ventilscheiben zusätzliche Öffnungen vorgesehen sein, um das Öffnungsverhalten zu beeinflussen, wie dies in Figur 2 für eine Voröffnungsscheibe 18 gezeigt ist.

Das Ventilscheibenpaket ist mit einer Seite gegen einen an dem Grundkörper 11 ausgebildeten Sitz 19 vorgespannt und stützt sich mit seiner anderen Seite auf einem Ventilteller 20 der federelastischen Verschlusseinrichtung 13 ab. Mit dem Bezugszeichen 21 sind eine oder mehrere Distanzscheiben gekennzeichnet, welche es ermöglichen, den Abstand der Ventilscheiben 17 vom Sitz 19 und gegebenenfalls auch vom Ventilteller 20 einzustellen. Liegt ein bestimmtes Strömungsdruckniveau an den Ventilscheiben 17 an, so heben diese vom Sitz 19 ab und biegen sich durch, bis sie in Anlage gegen den Ventilteller 20 gelangen.

Der Ventilteller 20 wie auch die Ventilscheiben 17 sind axial am Außenumfang der Ventilführung 14 geführt und so um einen zusätzlichen Öffnungsweg axial verschiebbar, um den Öffnungsquerschnitt des Dämpferventils zu erhöhen. Sie stützen sich jeweils mit einem radial innenliegenden Abschnitt axial an einem Absatz des Grundkörpers 11 ab und sind gegen diesen mittels einer Druckfeder 22 der Verschlusseinrichtung 13 verspannt. Die axiale Verschiebung erfolgt dementsprechend gegen die Kraft der Druckfeder 22. Diese Druckfeder 22 ist zwischen dem Ventilteller 20 und dem Ventilfedersitz 16 angeordnet. Zur Gewährleistung - einer präzisen Vorspannkraft sowie zur Vermeidung von Kippmomenten im Bereich der Druckfeder 22 ist diese durch mehrere rotationssymmetrische Federelemente gebildet. Vorliegend ist die Druckfeder 22 ein Tellerfederpaket aus mehreren Tellerfedern 23.

Dabei sind die Federsteifigkeiten der Ventilscheiben 17 und der Druckfeder 22 derart aufeinander abgestimmt, dass bei Anliegen eines Strömungsdrucks zunächst ein Durchbiegen der Ventilscheiben 17 in Richtung des Ventiltellers 20 erfolgt, bevor eine merkliche axiale Verschiebung des Ventiltellers 22 sowie eine damit verbundene Parallelverschiebung der Ventilscheiben 17 unter Verformung der Druckfeder 22 eintritt. Beim Öffnen des Ventils können sich die Ventilscheiben 17 maximal bis zum Anschlag gegen den Ventilteller 20 durchbiegen. Bei hohen Kräften werden sie zudem parallel gegen die Druckfeder 22 verschoben. Die Federsteifigkeit der Ventilscheiben 17 ist folglich deutlich geringer als die der Druckfeder 22.

Das Einstellen der Vorspannkraft der Druckfeder 22 erfolgt kraftgesteuert. Dazu wird während der Montage die Druckfeder 22 mit einer vorgegebenen Kraft, die der Vorspannkraft entspricht, zusammengedrückt und anschließend in dieser Stellung fixiert. Das Fixieren der Vorspannkraft erfolgt mittels des Ventilfedersitzes 16, der während der Montage axial auf den Außenumfang der Ventilführung 14 aufgeschoben wird. Durch die axialkraftfreie Zusammenführung werden Störmomente im Bereich der Druckfeder 22 vermieden. Unter Beibehaltung der Druckkraft wird der Ventilfedersitz 16 radial kraftschlüssig an der Ventilführung 14 festgelegt.

Die radial kraftschlüssig wirkende Verbindung 24 ist lösbar ausgebildet. Sie besteht beispielsweise aus einer radial wirkenden Klemmschraube, die seitlich in den muffenartigen Ventilfedersitz 16 eingeschraubt wird und gegen die Ventilführung 14 drückt, oder aus einer radial wirkenden Klemmeinrichtung, bei der sowohl der Außenumfang der Ventilführung 14 als auch eine korrespondierende Durchgangsöffnung des Ventilfedersitzes 16 jeweils einen unrunden Querschnitt aufweisen. Die Querschnitte sind dabei so gewählt, dass sich in einer ersten Relativstellung beide Bauteile axial gegeneinander verschieben lassen, in einer zweiten Relativstellung, die aus der ersten Relativstellung durch eine kurze Verdrehung erreicht wird, infolge Keilwirkung ein Verklemmen auftritt.

Einzelne Tellerfedern sind für eine genaue Einstellung der Vorspannkraft unter Umständen zu hart, so dass ein Setzen zu einem Verlust an Vorspannkraft führt. Dem kann durch ein Tellerfederpaket aus mehreren Tellerfedern 23 entgegengewirkt werden. Bei dem dargestellten Ausführungsbeispiel umfasst die Druckfeder 22 zwei Tellerfederpakete, deren Tellerfedern 23 jeweils entgegengesetzt eingebaut sind. Hierdurch ergibt sich eine weichere Federkennung für die Druckfeder 22, so dass bei einem Setzen der Verlust an Vorspannkraft kleiner ausfällt. Es hat sich gezeigt, dass mit zwei Tellerfederpaketen wie dargestellt, bei einem Schwingungsdämpfer für eine Kraftfahrzeug-Radaufhängung eine ausreichend genaue Einstellung der Vorspannkraft erzielt werden kann.

Es ist jedoch möglich, auch mehr oder weniger als zwei Tellerfederpakete einzubauen.

Vorliegend sind sämtliche Tellerfedern der Tellerfederpakete gleichartig ausgebildet, wodurch die Teilevielfalt auf einem Minimum gehalten wird.

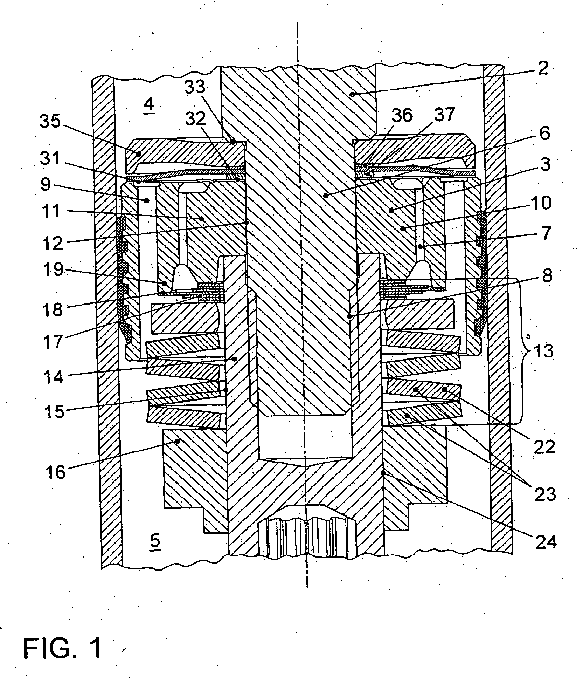

Wie Figur 1 weiter zeigt, ist die Druckfeder 22 an dem Ventilteller 20 an einem radial innenliegenden, der Ventilführung 14 benachbarten Wandabschnitt des Ventiltellers 20 abgestützt. Der Außendurchmesser der Tellerfedern 23 kann somit größer als der Außendurchmesser des Ventiltellers 21 gewählt werden. Durch die führungsnahe Abstützung werden stärkere Kippmomente an dem Ventilteller 20 sowie ein Verkanten desselben mit der Ventilführung 14 vermieden.

Das Verhältnis des Außendurchmessers der Druckfeder 22 zu der Pakethöhe der Druckfeder 22 bzw. aller Tellerfedern derselben, wird im Ruhezustand bevorzugt im Bereich von 2,5 bis 3,5 gewählt. Weiter bevorzugt liegt dieses Verhältnis im Bereich von 2,65 bis 3,4 und idealerweise im Bereich von 2,95 bis 3,15.

Hinsichtlich des Verhältnisses von Außendurchmesser zu Innendurchmesser der Tellerfedern 23 empfehlen sich Werte im Bereich von 1,7 bis 2,0, vorzugsweise im Bereich von 1,8 bis 1,95. Hierdurch wird bei einem Schwingungsdämpfer eine gute Raumausnutzung des Querschnitts erzielt.

Das Verhältnis von Außendurchmesser zu Wanddicke der Tellerfedern 23 liegt im Bereich von 16 bis 21,5, vorzugsweise im Bereich von 17,5 bis 19,5.

Prinzipiell kann das Dämpferventil 10 als in lediglich eine Richtung öffnend ausgebildet werden. Bei dem dargestellten Ausführungsbeispiel ist hingegen eine weitere federelastische Verschlusseinrichtung 30 vorgesehen, die im Ruhezustand einen zweiten Strömungsweg 9 durch den Grundkörper 11, der dem ersten Strömungsweg 7 entgegengerichtet ist, absperrt.

Die weitere federelastische Verschlusseinrichtung 30 weist hierzu eine oder mehrere Ventilscheiben 31 auf, die mit einem radial am weitesten innenliegenden Abschnitt 32 zwischen dem Grundkörper 11 und einer Schulter 33 der Kolbenstange 2 eingespannt sind und mit radial weiter außen liegenden Abschnitten den zweiten Strömungsweg 9 bildende Durchgangsöffnungen des Grundkörpers 11 abdeckten.

Bei dem dargestellten Ausführungsbeispiel wird die Kraft der Einspannung durch die Spannkraft der Ventilführung 14 bereitgestellt. Somit können sämtliche Komponenten des Dämpferventils 10 mit Ausnahme der Elemente der ersten federelastischen Verschlusseinrichtung 13 auf die Kolbenstange 2 aufgeschoben und mittels der Ventilführung 14 an der Kolbenstange 2 festgelegt werden. An letzterer ist dementsprechend lediglich eine einzige Anlageschulter 33 zur Abstützung des Dämpferventils 10 erforderlich.

Die Vorspannung der Ventilscheiben 31 der weiteren Verschlusseinrichtung 30 erfolgt vorliegend mit einer Vorspannfeder 34 in Form einer sternförmigen Tellerfeder, die ebenfalls zwischen dem Grundkörper 11 und der Schulter 33 eingespannt ist. Anstelle einer Tellerfeder, die axial besonders kompakt baut, können an dieser Stelle jedoch auch andere Federtypen vorgesehen sein. Insbesondere kann die Vorspannung der Ventilscheiben 31 der weiteren federelastischen Verschlusseinrichtung 30 auch mittels einer Schraubenfeder erfolgen. Im Unterschied zu der ersten Verschlusseinrichtung 13 wirkt die Vorspannfeder 34 der weiteren federelastischen Ventileinrichtung 30 unmittelbar auf die Ventilscheiben 31 ein. Es ist jedoch auch möglich, ein kraftübertragendes Zwischenelement wie beispielsweise einen Ventilteller zwischenzuschalten.

Die weitere Verschlusseinrichtung 30 umfasst weiterhin eine Anschlagplatte 35, die zwischen der bzw. den Ventilscheiben 31 der weiteren federelastischen Verschlusseinrichtung 30 und der Schulter 33 der Kolbenstange 2 angeordnet ist. Die Anschlagplatte 35 begrenzt die maximale Durchbieauna der Ventilscheibe bzw. Ventilscheiben 31 der weiteren federelastischen Verschlusseinrichtung 30. Über scheibenförmige Distanzstücke 36 und 37 lassen sich die Vorspannung der Ventilscheiben 31 und der Vorspannfeder 34 variieren.

Bei der Montage des vorstehend erläuterten Dämpferventils 10 werden zunächst die Anschlagplatte 35 und die weitere Verschlusseinrichtung 30 auf den Endabschnitt 6 der Kolbenstange 2 aufgeschoben, bis diese gegen die Schulter 33 anliegen. Anschließend wird der Grundkörper 2 aufgeschoben und mittels der Ventilführung 14 an der Kolbenstange 2 befestigt. Danach erfolgt die Montage der ersten Verschlusseinrichtung 13, indem die Ventilscheiben 17, der Ventilteller 20 und die Druckfeder 22 in der genannten Reihenfolge auf den Ventilführung 14 aufgesteckt werden. Abschließend wird der Ventilfedersitz 16 axial auf die Ventilführung 14 aufgeschoben und nach Vorspannung der Druckfeder 22 und der Ventilscheiben 17 mit der Ventilführung radial verklemmt.

Das Dämpferventil 10 wurde vorstehend als Kölbenventil beschrieben. Es ist jedoch nicht auf den Einsatz an einem Kolben eines Schwingungsdämpfers beschränkt. Vielmehr ist es auch möglich, dieses Dämpferventil als Bodenventil an einem Schwingungsdämpfer einzusetzen.

Des weiteren kann anstelle einer Klemmverbindung zwischen dem Ventilfedersitz 16 und der Ventilführung 14 auch eine Schweiß-, Löt- oder Klebverbindung vorgesehen sein, solange eine merkliche thermische Verformung vermieden wird, das heißt eine axialkraftneutrale Verbindungstechnik eingesetzt wird. Beispielsweise kann Ventilfedersitz 16 durch Laserschweißen an der Zwischenbuchse befestigt werden.

In einer kinematischen Umkehrung kann anstelle einer Ventilführung 14 mit einer Gewindeöffnung auch ein Zapfen verwendet werden, der durch den Grundkörper 11 hindürchgeführt und mit der Kolbenstange 2 verbunden wird. Möglich ist weiterhin, einen einstückig mit dem Grundkörper 11 ausgebildeten Vorsprung als Ventilführung 14 vorzugehen.

Das vorstehend erläuterte Dämpferventil 10 zeichnet sich durch eine hohe Kennungsstabilität aus. Insbesondere ermöglicht es auf einfache Art und Weise den Aufbau einer definierten Vorspannkraft bei der Montage und deren nachfolgende Beibehaltung in engen Toleranzgrenzen. Die Aufbringung der Vorspannkraft sowie die gesamte Montage sind überdies gut automatisierbar

Die Erfindung wurde vorstehend anhand eines Ausführungsbeispiels sowie weiterer Abwandlungen näher erläutert. Sie ist jedoch nicht darauf beschränkt, sondern umfasst alle durch die Patentansprüche definierten Ausgestaltungen.

### Bezugszeichenliste

- 1: Schwingungsdämpfer
- 2: Kolbenstange
- 3: Kolben
- 4: Arbeitskammer
- 5: Arbeitskammer
- 6: Endabschnitt
- 7: Strömungsweg
- 8: Außengewindeabschnitt
- 9: Strömungsweg
- 10: Dämpferventil
- 11: Grundkörper
- 12: Durchgangsöffnung
- 13: federelastische Verschlusseinrichtung
- 14: Ventilführung
- 15: Außenumfang
- 16: Ventilfedersitz
- 17: Ventilscheibe(n)
- 18: Voröffnungsscheibe
- 19: Sitz
- 20: Ventilteller
- 21: Distanzscheibe
- 22: Druckfeder
- 23: Tellerfeder
- 24: radial kraftschlüssig wirkende Verbindung
- 30: weitere federelastische Verschlusseinrichtung
- 31: Ventilscheibe(n)
- 32: radial innenliegender Abschnitt der Ventilscheibe(n)
- 33: Schulter
- 34: sternförmige Tellerfeder
- 35: Anschlagplatte
- 36: Distanzstück
- 37: Distanzstück

## Patentansprüche

1. Kraftgesteuert einstellbares Dämpferventil, umfassend:
- einen Grundkörper (11),
- eine federelastische Verschlusseinrichtung (13), die in einem Ruhezustand einen Strömungsweg (7) durch den Grundkörper (11) absperrt und bei Anströmung durch ein Strömungsmedium öffnet, wobei die Verschlusseinrichtung (13) eine oder mehrere Ventilscheiben (17) und eine zu diesen in Reihe geschaltete Druckfeder (22), welche die eine oder mehreren Ventilscheiben (17) gegen den Grundkörper (11) verspannt, umfasst,
- eine Ventilführung (14), an deren Außenumfang (15) die federelastische Verschlusseinrichtung (13) axial geführt ist, und
- einen Ventilfedersitz (16) zur Abstützung der federelastischen Verschlusseinrichtung (13), der axial auf die Ventilführung (14) aufgeschoben und mit einer radial kraftschlüssig wirkenden Verbindung (24) an der Ventilführung (14) festgelegt ist,
**dadurch gekennzeichnet, dass**
die Druckfeder (22) der federelastischen Verschlusseinrichtung (13) mehrere in Reihe geschaltete Tellerfedern (23) aufweist.

2. Dämpferventil nach Anspruch 1, **dadurch gekennzeichnet, dass** die Druckfeder (22) ein Tellerfederpaket mit zwei Tellerfedern (23) umfasst, die entgegengesetzt eingebaut sind.

3. Dämpferventil nach Anspruch 1 oder 2, **dadurch gekennzeichnet, dass** die Tellerfedern (23) der Druckfeder (22) gleichartig sind.

4. Dämpferventil nach einem der Ansprüche 1 bis 3, **dadurch gekennzeichnet, dass** zwei gleichartige Paare entgegengesetzt angeordneter Tellerfedern (23) in Reihe geschaltet sind.

5. Dämpferventil nach einem der Ansprüche 1 bis 4, **dadurch gekennzeichnet, dass** ein Ventilteller (20) zwischen der mindestens einen Ventilscheibe (17) und den Tellerfedern (23) angeordnet und an der Ventilführung (14) axial geführt ist, wobei die Tellerfedern (23) an einem innenliegenden, der Ventilführung benachbarten Wandabschnitt des Ventiltellers (20) abgestützt sind.

6. Dämpferventil nach einem der Ansprüche 1 bis 5, **dadurch gekennzeichnet, dass** der Außendurchmesser der Tellerfedern (23) größer ist als der Außendurchmesser des Ventiltellers (20).

7. Dämpferventil nach einem der Ansprüche 1 bis 6, **dadurch gekennzeichnet, dass** das Verhältnis von Außendurchmesser zu Pakethöhe der Druckfeder (22) im Ruhezustand im Bereich von 2,5 bis 3,5, vorzugsweise von 2,65 bis 3,4 und weiter bevorzugt von 2,95 bis 3,15 liegt.

8. Dämpferventil nach einem der Ansprüche 1 bis 7, **dadurch gekennzeichnet, dass** das Verhältnis von Außendurchmesser zu Innendurchmesser der Tellerfedern (23) im Bereich von 1,7 bis 2,0, vorzugsweise im Bereich von 1,8 bis 1,95 liegt.

9. Dämpferventil nach einem der Ansprüche 1 bis 8, **dadurch gekennzeichnet, dass** das Verhältnis von Außendurchmesser zu Wanddicke der Tellerfedern (23) im Bereich von 16 bis 21,5, vorzugsweise 17,5 bis 19,5 liegt.

10. Dämpferventil nach einem der Ansprüche 1 bis 9, **dadurch gekennzeichnet, dass** eine weitere federelastische Verschlusseinrichtung (30) vorgesehen ist, die im Ruhezustand einen zweiten Strömungsweg (9) durch den Grundkörper (11), der dem ersten Strömungsweg entgegengerichtet ist (7), absperrt, wobei die weitere Verschlusseinrichtung (30) mindestens eine Ventilscheibe (31) aufweist, die mit einem radial am weitesten innenliegenden Abschnitt (32) zwischen dem Grundkörper (11) und einer Schulter (33) einer Kolbenstange (2) eingespannt ist, wobei die Kraft der Einspannung vorzugsweise durch die Spannkraft der Ventilführung (14) bereitgestellt ist.

11. Dämpferventil nach Anspruch 10, **dadurch gekennzeichnet, dass** die weitere Verschlusseinrichtung (30) eine Anschlagplatte (35) umfasst, die zwischen der bzw. den Ventilscheiben (31) der weiteren Verschlusseinrichtung (30) und der Schulter (33) der Kolbenstange (2) angeordnet ist und die maximale Durchbiegung der Ventilscheibe bzw. Ventilscheiben (31) der weiteren Verschlusseinrichtung (30) begrenzt.

12. Schwingungsdämpfer mit einem Dämpferventil nach einem der Ansprüche 1 bis 11.

## Claims

1. Damper valve which is adjustable in a force-controlled manner, comprising:
- a basic body (11),
- a spring-elastic closure device (13) which, in an inoperative state, shuts off a flow path (7) through the basic body (11) and, when a flow medium flows there against, opens same, wherein the closure device (13) comprises one or more valve discs (17) and a compression spring (22) which is connected in series with the latter and braces the one or more valve discs (17) against the basic body (11),
- a valve guide (14), on the outer circumference (15) of which the spring-elastic closure device (13) is guided axially, and
- a valve spring seat (16) for supporting the spring-elastic closure device (13), which valve spring seat (16) is pushed axially onto the valve guide (14) and is fixed on the valve guide (14) by a connection (24) acting radially in a frictional manner, **characterized in that** the compression spring (22) of the spring-elastic closure device (13) has a plurality of cup springs (23) which are connected in series.

2. Damper valve according to Claim 1, **characterized in that** the compression spring (22) comprises a cup spring assembly with two cup springs (23) which are installed in an opposed manner.

3. Damper valve according to Claim 1 or 2, **characterized in that** the cup springs (23) of the compression spring (22) are of a similar type.

4. Damper valve according to one of Claims 1 to 3, **characterized in that** two similar pairs of cup springs (23) arranged in an opposed manner are connected in series.

5. Damper valve according to one of Claims 1 to 4, **characterized in that** a valve head (20) is arranged between the at least one valve disc (17) and the cup springs (23) and is guided axially on the valve guide (14), wherein the cup springs (23) are supported on an inner wall portion of the valve head (20), which wall portion is adjacent to the valve guide.

6. Damper valve according to one of Claims 1 to 5, **characterized in that** the outside diameter of the cup springs (23) is larger than the outside diameter of the valve head (20).

7. Damper valve according to one of Claims 1 to 6, **characterized in that** the ratio of outside diameter to assembly height of the compression spring (22) in the inoperative state lies within the range of 2.5 to 3.5, preferably of 2.65 to 3.4 and furthermore preferably of,2.96 to 3.15.

8. Damper valve according to one of Claims 1 to 7, **characterized in that** the ratio of outside diameter to inside diameter of the cup springs (23) is within the range of 1.7 to 2.0, preferably within the range of 1.8 to 1.95.

9. Damper valve according to one of Claims 1 to 8, **characterized in that** the ratio of outside diameter to wall thickness of the cup springs (23) is within the range of 16 to 21.5, preferably 17.5 to 19.5.

10. Damper valve according to one of Claims 1 to 9, **characterized in that** a further spring-elastic closure device (30) is provided which, in the inoperative state, blocks off a second flow path (9) through the basic body (11), which flow path is directed counter to the first flow path (7), wherein the further closure device (30) has at least one valve disc (31) which is clamped with a radially furthest inner portion (32) between the basic body (11) and a shoulder (33) of a piston rod (2), wherein the clamping force is preferably provided by the tensioning force of the valve guide (14).

11. Damper valve according to Claim 10, **characterized in that** the further closure device (30) comprises a stop plate (35) which is arranged between the valve disc or the valve discs (31) of the further closure device (30) and the shoulder (33) of the piston rod (2) and limits the maximum deflection of the valve disc or valve discs (31) of the further closure device (30).

12. Vibration damper with a damper valve according to one of Claims 1 to 11.

## Revendications

1. Soupape d'amortissement pouvant être réglée de manière commandée par force, comportant :
- un corps de base (11),
- un dispositif de fermeture élastique (13) qui bloque, dans un état de repos, une voie d'écoulement (7) à travers le corps de base (11) et s'ouvre en cas d'entrée d'écoulement d'un milieu d'écoulement, le dispositif de fermeture (13) comportant un ou plusieurs disques de soupape (17) et un ressort de compression (22) monté en série par rapport à ceux-ci, lequel serre les un ou plusieurs disques de soupape (17) contre le corps de base (11),
- un guide de soupape (14), sur la périphérie extérieure (15) duquel est guidé axialement le dispositif de fermeture élastique (13), et
- un siège de ressort de soupape (16) pour supporter le dispositif de fermeture élastique (13), lequel siège de ressort de soupape est enfilé axialement sur le guide de soupape (14) et fixé au guide de soupape (14) par une liaison (24) agissant radialement par engagement par force, **caractérisée en ce que** le ressort de compression (22) du dispositif de fermeture élastique (13) comprend plusieurs ressorts à disque (23) montés en série.

2. Soupape d'amortissement selon la revendication 1, **caractérisée en ce que** le ressort de compression (22) comporte un paquet de ressorts à disque comprenant deux ressorts à disque (23) qui sont installés en sens contraires.

3. Soupape d'amortissement selon la revendication 1 ou 2, **caractérisée en ce que** les ressorts à disque (23) du ressort de compression (22) sont similaires.

4. Soupape d'amortissement selon l'une quelconque des revendications 1 à 3, **caractérisée en ce que** deux paires similaires de ressorts à disque (23) disposés en sens contraires sont montées en série.

5. Soupape d'amortissement selon l'une quelconque des revendications 1 à 4, **caractérisée en ce qu'**une tête de soupape (20) est disposée entre l'au moins un disque de soupape (17) et les ressorts à disque (23) et guidée axialement sur le guide de soupape (14), les ressorts à disque (23) étant supportés sur une portion de paroi intérieure, adjacente au guide de soupape, de la tête de soupape (20).

6. Soupape d'amortissement selon l'une quelconque des revendications 1 à 5, **caractérisée en ce que** le diamètre extérieur des ressorts à disque (23) est supérieur au diamètre extérieur de la tête de soupape (20).

7. Soupape d'amortissement selon l'une quelconque des revendications 1 à 6, **caractérisée en ce que** le rapport du diamètre extérieur à la hauteur de paquet du ressort de compression (22) se situe, dans l'état de repos, dans la plage de 2,5 à 3,5, de préférence de 2,65 à 3,4 et de manière plus particulièrement préférée de 2,95 à 3,15.

8. Soupape d'amortissement selon l'une quelconque des revendications 1 à 7, **caractérisée en ce que** le rapport du diamètre extérieur au diamètre intérieur des ressorts à disque (23) se situe dans la plage de 1,7 à 2,0, de préférence dans la plage de 1,8 à 1,95.

9. Soupape d'amortissement selon l'une quelconque des revendications 1 à 8, **caractérisée en ce que** le rapport du diamètre extérieur à l'épaisseur de paroi des ressorts à disque (23) se situe dans la plage de 16 à 21,5, de préférence de 17,5 à 19,5.

10. Soupape d'amortissement selon l'une quelconque des revendications 1 à 9, **caractérisée en ce qu'**un dispositif de fermeture élastique (30) supplémentaire est prévu, lequel bloque, dans l'état de repos, une deuxième voie d'écoulement (9) à travers le corps de base (11), laquelle est orientée en sens inverse à la première voie d'écoulement (7), le dispositif de fermeture (30) supplémentaire comprenant au moins un disque de soupape (31), lequel est serré, par une portion (32) située radialement le plus à l'intérieur, entre le corps de base (11) et un épaulement (33) d'une tige de piston (2), la force du serrage étant produite de préférence par la force de serrage du guide de soupape (14).

11. Soupape d'amortissement selon la revendication 10, **caractérisée en ce que** le dispositif de fermeture (30) supplémentaire comporte une plaque de butée (35) qui est disposée entre le ou les disques de soupape (31) du dispositif de fermeture (30) supplémentaire et l'épaulement (33) de la tige de piston (2) et limite la flexion maximale du disque de soupape ou des disques de soupape (31) du dispositif de fermeture (30) supplémentaire.

12. Amortisseur de vibrations comprenant une soupape d'amortissement selon l'une quelconque des revendications 1 à 11.
